(19) Europäisches Patentamt

European Patent Office

Office européen des brevets

(11) **EP 4 489 094 A1**

(12) **EUROPEAN PATENT APPLICATION**
published in accordance with Art. 153(4) EPC

(43) Date of publication:
**08.01.2025 Bulletin 2025/02**

(21) Application number: **23762991.0**

(22) Date of filing: **03.03.2023**

(51) International Patent Classification (IPC):
**H01M 4/13** (2010.01)    **H01M 4/139** (2010.01)

(52) Cooperative Patent Classification (CPC):
**H01M 4/13; H01M 4/139; H01M 4/62;
H01M 10/052; Y02E 60/10**

(86) International application number:
**PCT/CN2023/079503**

(87) International publication number:
**WO 2023/165593 (07.09.2023 Gazette 2023/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.03.2022 CN 202210209397**

(71) Applicant: **BYD Company Limited
Shenzhen, Guangdong 518118 (CN)**

(72) Inventors:
• **GE, Liping
Shenzhen, Guangdong 518118 (CN)**

• **HAO, Rong
Shenzhen, Guangdong 518118 (CN)**
• **ZHUANG, Minghao
Shenzhen, Guangdong 518118 (CN)**
• **SU, Bizhe
Shenzhen, Guangdong 518118 (CN)**
• **XU, Zhan
Shenzhen, Guangdong 518118 (CN)**

(74) Representative: **Dehns Germany Partnerschaft
mbB
Theresienstraße 6-8
80333 München (DE)**

(54) **ELECTRODE PLATE AND PREPARATION METHOD THEREFOR, AND LITHIUM BATTERY**

(57)    An electrode plate and a method for preparation therefor, and a lithium battery are provided. The electrode plate includes an electrode active material layer. The electrode active material layer includes a three-dimensional conductive network base, and an electrode active material and a binder that are loaded on the three-dimensional conductive network base. The three-dimensional conductive network base and the electrode active material satisfy a relational expression below:

$$d \times 6D^2 \times (\frac{m}{\rho} / \frac{\pi D^3}{6}) \leq V \leq (D^3 - \frac{\pi D^3}{6}) \times (\frac{m}{\rho} / \frac{\pi D^3}{6})$$

where V is an actual volume of the three-dimensional conductive network base, whose unit is cm$^3$; m is mass of the electrode active material, whose unit is g; D is a D50 particle size of the electrode active material, whose unit is $\mu$m; $\rho$ is true density of the electrode active material, whose unit is g/cm$^3$; and d is a thickness of a single carbon atom layer, and a value of d is 0.334 nm.

**EP 4 489 094 A1**

FIG. 1B

**Description**

**CROSS REFERENCE TO RELATED APPLICATIONS**

The present disclosure claims priority to Chinese Patent Application No. 202210209397.X, entitled "ELECTRODE PLATE AND METHOD FOR PREPARATION THEREFOR, AND LITHIUM BATTERY" filed on March 03, 2022, which is incorporated herein by reference in its entirety.

**FIELD**

The present invention relates to the technical field of lithium batteries, and specifically, to an electrode plate and a method for preparation therefor, and a lithium battery.

**BACKGROUND**

With the development of the new energy industry, the market's requirements for the energy and power of lithium batteries are also increasing. According to literature reports, the industry improves the energy density and power of lithium batteries by increasing the surface density, compaction density, and mass ratio of electrode active materials. However, in the production process of conventional electrode plates, the industry generally ensures the electronic conductivity of the electrode plates during battery charging and discharging by adding an excessive amount of conductive agent. The excessive amount of conductive agent will inevitably lead to too little active material content in the electrode plate, thereby inhibiting the function of the energy density of the battery. In addition, both the distribution and the morphology of the excessive amount of conductive agent in the electrode plate are difficult to control.

**SUMMARY**

In view of this, the present disclosure provides an electrode plate and a preparation method therefor, and a lithium battery. The electrode plate is equipped with a three-dimensional conductive network base (also sometimes referred to as "matrix"), and controlling an actual volume of the three-dimensional conductive network base and an electrode active material to satisfy a specific relationship, which can optimize a conductive network in the electrode plate, thereby improving the function of the capacity per gram, further facilitating the function of the energy density of the battery, and improving the capacity retention ratio of the battery.

According to a first aspect of the present disclosure, an electrode plate is provided. The electrode plate includes an electrode active material layer. The electrode active material layer includes a three-dimensional conductive network base, and an electrode active material and a binder that are loaded on the three-dimensional conductive network base. The three-dimensional conductive network base and the electrode active material satisfy a relational expression below:

$$d \times 6D^2 \times (\frac{m}{\rho} / \frac{\pi D^3}{6}) \leq V \leq (D^3 - \frac{\pi D^3}{6}) \times (\frac{m}{\rho} / \frac{\pi D^3}{6})$$

where V is an actual volume of the three-dimensional conductive network base, whose unit is cm$^3$; m is mass of the electrode active material, whose unit is g; D is a D50 particle size of the electrode active material, whose unit is $\mu$m; $\rho$ is true density of the electrode active material, whose unit is g/cm$^3$; and d is a thickness of a single layer of carbon atom layers with a value of d is 0.334 nm.

Optionally, D is in a range from 0.1 $\mu$m to 20 $\mu$m.

Optionally, in the electrode plate, V corresponding to each 100 g of the electrode active material is in a range from 0.01 cm$^3$ to 20 cm$^3$.

Optionally, true density of a lithium cobalt oxide is 5.1 g/cm$^3$; true density of the ternary material is 4.8 g/cm$^3$; true density of a lithium manganese oxide is 4.2 g/cm$^3$; true density of a lithium iron phosphate is 3.6 g/cm$^3$; and true density of graphite is 2.26 g/cm$^3$.

Optionally, the three-dimensional conductive network base is a current collector with a three-dimensional network structure.

Optionally, the electrode plate further includes a current collector, and the three-dimensional conductive network base is located on at least one side surface of the current collector.

Optionally, a shape of the three-dimensional conductive network base includes a cage shape.

Optionally, at least part of a material of the three-dimensional conductive network base includes at least one of a conductive polymer, a metal material, and a conductive carbon material.

Optionally, the electrode plate is a positive electrode plate, the electrode active material includes a positive electrode active material, and the positive electrode active material includes at least one of a lithium iron phosphate, a lithium manganese phosphate, a lithium manganese iron phosphate, a lithium vanadium phosphate, lithium cobalt phosphate, a lithium cobalt oxide, a lithium manganese oxide, a lithium nickel manganese oxide, a layered lithium nickel cobalt manganese oxide ternary material, a layered lithium nickel cobalt aluminum oxide ternary material, and a lithium nickel cobalt manganese aluminum oxide quaternary material.

Optionally, a general structural formula of the layered lithium nickel cobalt manganese oxide ternary material is $Li_{1+m}Ni_xCo_yMn_{1-x-y}O_2$, where $x \geq 0.33$, $0 \leq y \leq 0.4$, and $0 \leq m \leq 0.1$.

Optionally, a general structural formula of the layered lithium nickel cobalt aluminum oxide ternary material is $Li_{1+m}Ni_xCo_yAl_{1-x-y}O_2$, where $x \geq 0.33$, $0 \leq y \leq 0.4$, and $0 \leq m \leq 0.1$.

Optionally, a general structural formula of the lithium nickel cobalt manganese aluminum oxide quaternary material is $Li_{1+m}Ni_xCo_yMn_zAl_{1-x-y-z}O_2$, where $x \geq 0.33$, $0 \leq y \leq 0.4$, $0 \leq z \leq 0.4$, and $0 \leq m \leq 0.1$.

Optionally, the electrode plate is a negative electrode plate, the electrode active material includes a negative electrode active material, and the negative electrode active material includes at least one of a graphite, a natural graphite, a mesophase carbon microspheres, and a silicon-carbon negative electrode material.

Correspondingly, according to a second aspect of the present disclosure, a preparation method for an electrode plate is provided. The preparation method includes:

constructing a three-dimensional conductive network base;

forming a mixed material containing an electrode active material and a binder on the three-dimensional conductive network base, to load the electrode active material on the three-dimensional conductive network base, to obtain an electrode plate precursor; and

rolling the electrode plate precursor, to obtain the electrode plate according to the first aspect of the present disclosure.

Optionally, the forming a mixed material containing an electrode active material and a binder on the three-dimensional conductive network base includes:
placing the three-dimensional conductive network base on a current collector, and then coating the three-dimensional conductive network base with the mixed material containing the electrode active material and the binder.

Optionally, the rolling the electrode plate precursor includes:
placing the electrode plate precursor on a current collector, and then rolling the electrode plate precursor.

Optionally, a method for constructing the three-dimensional conductive network base includes: performing three-dimensional printing, performing powder metallurgy, performing electrodeposition, or etching the current collector.

Optionally, when a raw material used for preparing the three-dimensional conductive network base is a non-conductive material, the constructing a three-dimensional conductive network base further includes conductivity treatment.

Optionally, the conductivity treatment includes:

after a conductive agent is mixed into the raw material, by the three-dimensional printing or the electrodeposition, preparing the three-dimensional conductive network base; or

after a non-conductive three-dimensional network base is prepared through the three-dimensional printing or the electrodeposition, performing carbonization treatment on a surface of the non-conductive three-dimensional network base or forming a conductive layer on the non-conductive three-dimensional network base, to obtain the three-dimensional conductive base.

Optionally, a formation manner of forming the mixed material containing the electrode active material and the binder on the three-dimensional conductive network base includes coating, and the coating includes drip coating, brush coating, spray coating, dip coating, blade coating, or spin coating.

According to a third aspect of the present disclosure, a lithium battery is provided. The lithium battery includes the electrode plate according to the first aspect of the present disclosure.

## BRIEF DESCRIPTION OF THE DRAWINGS

FIG. 1A and FIG. 1B are schematic structural diagrams of cross-sections of an electrode plate according to an embodiment of the present disclosure;
FIG. 2 is a schematic structural diagram of a three-dimensional conductive network base prepared in Embodiment 1; and

FIG. 3 is a schematic flowchart of a preparation method for an electrode plate according to an embodiment of the present disclosure.

Descriptions of reference numerals: 100-electrode plate; 10-current collector; 11-three-dimensional conductive network base; and 12-three-dimensional conductive network base.

## DETAILED DESCRIPTION

An embodiment of the present disclosure provides an electrode plate. The electrode plate is a positive electrode plate or a negative electrode plate. The electrode plate includes an electrode active material layer. The electrode active material layer includes a three-dimensional conductive network base, and an electrode active material and a binder that are loaded on the three-dimensional conductive network base. The three-dimensional conductive network base and the electrode active material satisfy a relational expression below:

$$d \times 6D^2 \times (\frac{m}{\rho} / \frac{\pi D^3}{6}) \leq V \leq (D^3 - \frac{\pi D^3}{6}) \times (\frac{m}{\rho} / \frac{\pi D^3}{6})$$

where V is an actual volume of the three-dimensional conductive network base, whose unit is cm$^3$; m is mass of the electrode active material, whose unit is g; D is a D50 particle size of the electrode active material, whose unit is $\mu$m; $\rho$ is true density of the electrode active material, whose unit is g/cm$^3$; and d is a thickness of a single layer of carbon atom layers with a value of d is 0.334 nm.

In the present disclosure, First, a mathematical calculation model is set for the actual volume of the three-dimensional conductive network base: starting from the function of the three-dimensional conductive network base, the base is a conductive network between electrode active materials, and all the electrode active materials need to be connected together and shaped. Therefore, each electrode active material is preset as a sphere with a diameter D. Multiple spheres are closely arranged. It may be understood that in this case, a gap between the closely arranged spheres is filled with the material for forming the three-dimensional conductive network base, and then the three-dimensional conductive network base material forms a three-dimensional conductive network connected to each other (that is, the three-dimensional conductive network may be understood as a class of prisms connected to each other interlaced, wherein the class of prisms for the sphere hollow or other shapes hollow). Alternatively, a preset three-dimensional network structure is first formed, and then a void of the three-dimensional network structure may be filled with the electrode active material (preset as a sphere with a diameter D). Therefore, the foregoing mathematical calculation model may be considered as a combination of a sphere with a diameter D and a hollow regular hexahedron attached to periphery of the sphere as a minimum volume unit.

In the foregoing relational expression, 6D$^2$ represents a surface area of the hollow regular hexahedron (whose diameter is D) attached to periphery of the sphere, and the sphere with a diameter of the D50 particle size of the electrode active material. In this case, d×6D$^2$ represents a minimum volume of the three-dimensional conductive network structure base used for forming the foregoing hollow regular hexahedron (that is, a minimum volume of the three-dimensional conductive network structure base used in the minimum volume unit). $\frac{\pi D^3}{6}$ represents a volume of the sphere with the D50 particle size of the electrode active material as the diameter, and D$^3$ may represent a volume of a solid regular hexahedron with an edge length D. In this case, $D^3 - \frac{\pi D^3}{6}$ may represent a volume of an irregular object remaining after a sphere with a diameter D is dug out from the solid regular hexahedron with the edge length D (that is, a maximum volume of the three-dimensional conductive network structure base used in the minimum volume unit). It can be seen that, in each minimum volume unit, a minimum unit volume V$_i$ of the three-dimensional conductive network base satisfies:

$$d \times 6D^2 \leq V_i \leq D^3 - \frac{\pi D^3}{6}$$

, and by multiplying the foregoing relational expression by the total quantity ( $\frac{m}{\rho} / \frac{\pi D^3}{6}$ ) of used microspheres made of the electrode active material, a relational expression between the actual volume of the entire three-dimensional conductive network base and the D50 particle size of the electrode active material can be obtained:

$$d \times 6D^2 \times (\frac{m}{\rho} / \frac{\pi D^3}{6}) \leq V \leq (D^3 - \frac{\pi D^3}{6}) \times (\frac{m}{\rho} / \frac{\pi D^3}{6})$$

.

When the actual volume V of the three-dimensional conductive network base is closer to a lower limit value defined in the foregoing relational expression, the amount of the used conductive agent can be minimized, that is, the proportion of the active material in the electrode plate can be maximized while ensuring that the electrode plate has a good conductive path to cause the electrode plate to have good rate performance and small internal resistance. When V is closer to an upper limit value of the foregoing relational expression, accuracy required for parameter control in the preparation of the three-dimensional conductive network base can be reduced. While the production efficiency of the electrode plate is improved, the proportion of the active material in the electrode plate can be improved, thereby improving the function of the capacity per gram, further facilitating the function of the energy density of the battery, and improving the capacity retention ratio of the battery.

In addition, when the actual volume of the three-dimensional conductive network base satisfies the foregoing relational expression, parameters such as a specific shape of the foregoing three-dimensional conductive network base, a size of the prisms, and a connection manner of the prisms may be further designed according to the physico-chemical characteristics (for example, a particle size and a compaction density) of the used electrode active material, to help directionally pack the electrode active material particles (that is, limit a packing manner and a position of the active material particles). In addition, it can also help design the areal density and the compaction density of the electrode plate and the cell, so that the active material of the electrode plate has a high areal density and a high compaction density, thereby improving the function of the capacity per gram, further facilitating the function of the energy density of the battery, and improving the capacity retention ratio of the battery.

In the present disclosure, the actual volume of the three-dimensional conductive network base mentioned above refers to an intrinsic volume of the three-dimensional conductive network base excluding an interstitial volume thereof. The actual volume of the three-dimensional conductive network base may be equal to a ratio of a mass thereof to a true density thereof.

In the present disclosure, the D50 particle size of the foregoing electrode active material refers to an average particle size of the electrode active material, and has a unit of $\mu$m. The specific definition of the foregoing D50 particle size includes the following cases: (1) The D50 particle size may be a particle size corresponding to a case that a cumulative volume percentage of the powdery electrode active material reaches 50%. (2) The D50 particle size may be a particle size corresponding to a case that a cumulative quantity percentage of the powdery electrode active material reaches 50%. (3) The D50 particle size may be a particle size that corresponds to a case that a cumulative volume percentage of the electrode active material particles reaches 50% or a particle size that corresponds to a case that a cumulative quantity percentage of the electrode active material particles reaches 50% and that is determined by randomly sampling a powdery electrode active material or an electrode plate, and observing a particle size status of the electrode active material particles thereof (the number of the electrode active material particles in the sampling object is generally greater than 500, and is preferably greater than 1000) under a scanning electron microscope (SEM).

When the electrode active material particles in the electrode plate are randomly sampled to determine the D50 particle size thereof, the test method specifically includes the following steps: a) Disassemble a fully discharged battery to obtain an electrode plate, and then cut an arbitrary position in a dressing area by using argon ions to obtain a cross-sectional sample of the electrode plate. b) Place the cross-sectional sample of the electrode plate in an SEM for observation, and adjust an electron microscope voltage and a magnification according to an actual requirement, to ensure that a sufficient number of particles in the sample can be clearly seen and photographed, to obtain an SEM photo. c) Import the obtained SEM photo into grayscale debugging software (for example, Geodict) to perform statistics on the particle sizes of the particles, or perform statistics on the particle sizes of the particles through artificial naked eye recognition. d) Perform 20 to 30 experiments cumulatively, where a statistical quantity of particles in each experiment is not less than 500 pcs; and perform statistics on the above results, and then obtain a particle size distribution range and a D50 particle size of the electrode active material particles in the electrode plate.

In some implementations of the present disclosure, D is in a range from 0.1 $\mu$m to 20 $\mu$m (that is, the D50 particle size of the electrode active material is in a range from 0.1 $\mu$m to 20 $\mu$m). Controlling the D50 particle size of the electrode active material to within the foregoing range helps suppress side reactions of the electrode active material during battery operation, and also helps ensure that the electrode plate has a large compaction density, thereby helping ensure the energy density of the battery.

In some implementations of the present disclosure, in the electrode plate, an actual volume V of the three-dimensional conductive network base corresponding to 100 g of the electrode active material is in a range from 0.01 $cm^3$ to 20 $cm^3$. For each 100 g of the electrode active material, the actual volume V of the corresponding three-dimensional conductive network base is controlled within an appropriate range, that is, the mass of the electrode active material loaded on the three-dimensional conductive network base per unit volume is controlled. This is beneficial to ensuring a material mass proportion of the electrode active material in the electrode plate and the preparability of the electrode plate, thereby ensuring that the battery has an appropriate energy density, a high battery capacity, superior rate characteristics, and a long service life.

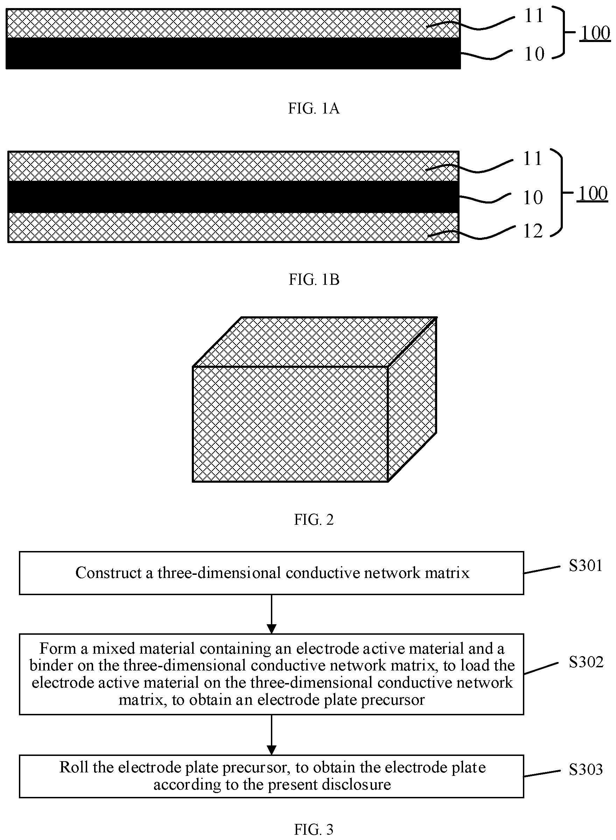

A specific structure of the electrode plate in the embodiments of the present disclosure is described below. Refer to FIG. 1A and FIG. 1B.

In some implementations of the present disclosure, the three-dimensional conductive network base is a current collector with a three-dimensional network structure. In this case, the three-dimensional conductive network base may be obtained by etching the current collector. It may be understood that in this case, for ease of carrying the electrode active material, the current collector does not have a three-dimensional network structure in the entire thickness direction thereof, but has a three-dimensional network structure on a side close to the electrode active material layer. Specifically, the electrode plate includes an unetched current collector, and a three-dimensional conductive network base obtained after part of the current collector is etched. In some specific embodiments, the current collector may include two parts in a thickness direction of the current collector. One part is a solid unetched current collector, and the other part includes a three-dimensional network structure obtained after the current collector is etched. In other words, the current collector includes a solid current collector substrate with a specific thickness and a current collector having a three-dimensional network structure (that is, a three-dimensional conductive network base). In some other embodiments, the current collector may include three parts in a thickness direction of the current collector: a solid shape in the middle, and three-dimensional network structures on both sides. Specifically, the electrode plate includes an unetched current collector, and two layers of three-dimensional conductive network matrices obtained after part of the current collector is etched. The two layers of three-dimensional conductive network matrices are respectively located on both sides of the unetched current collector. It may be further understood that shapes of the two layers of three-dimensional conductive network matrices may be the same or different. An electrode active material is loaded on each of all the three-dimensional conductive network matrices. The electrode active materials loaded on the two layers of three-dimensional conductive network matrices may be the same or different.

In some other implementations of the present disclosure, the electrode plate further includes a current collector, and the three-dimensional conductive network base is located on at least one side surface of the current collector. The current collector in this case may be an ordinary solid current collector and does not have a three-dimensional network structure. Specifically, refer to FIG. 1A. In this case, an electrode plate 100 includes a current collector 10, and a three-dimensional conductive network base 11 located on a side surface of the current collector 10. Further, a three-dimensional conductive network base may be arranged on one side surface of the current collector, or a three-dimensional conductive network base may be arranged on each of both side surfaces of the current collector. Specifically, refer to FIG. 1B. In this case, the electrode plate 100 includes a current collector 10, and three-dimensional conductive network matrices 11 and 12 respectively located on both side surfaces of the current collector 10. Shapes of the three-dimensional conductive network matrices 11 and 12 may be the same or different. An electrode active material is loaded on each of all the three-dimensional conductive network matrices. The electrode active materials loaded on the three-dimensional conductive network matrices 11 and 12 may be the same or different. Only when the electrode active material is loaded on the three-dimensional conductive network base, and the three-dimensional conductive network base is loaded on the current collector, normal operation of a battery can be ensured.

In some implementations of the present disclosure, a shape of the three-dimensional conductive network base includes a cage shape. The cage-shaped structure is conducive to the combination of the three-dimensional conductive network base and the current collector, and is also conducive to simplifying the setting of parameters of the three-dimensional conductive network base relative to the longitudinal and transverse directions of the electrode plate in the design process. In some other implementations, the shape of the three-dimensional conductive network base may alternatively be a three-dimensional foam, an N-hedral grid, a three-dimensional spherical grid, or some other three-dimensional network-like structures.

In an implementation of the present disclosure, at least part of a material of the three-dimensional conductive network base includes at least one of a conductive polymer, a metal material, and a conductive carbon material. The metal material may be an elementary metal or a metal alloy. In some specific embodiments, the material of the base of the three-dimensional conductive network is completely a conductive material, and may be specifically at least one of a conductive polymer, a metal material, and a conductive carbon material. In some other embodiments, part of the material of the three-dimensional conductive network base is a non-conductive material, and may be specifically a non-conductive polymer, a ceramic material, or the like. In the foregoing case, a conductive agent may be mixed into the non-conductive material, or a conductive coating may be formed on a surface of the non-conductive material. The conductive agent may be a material such as a carbon nanotube, a graphene, a fullerene, a graphyne, a conductive carbon black, or a Ketjenblack. Particularly, when the non-conductive material is a non-conductive polymer, slight carbonization treatment may be further performed on a surface thereof, so that at least part of the material in the final three-dimensional conductive network base is a conductive material. Further, at least an external surface of the three-dimensional conductive network base is made conductive. Therefore, the three-dimensional conductive network base can fully come into contact with the electrode active material, so that an efficient conductive network can be formed in the electrode plate.

In an implementation of the present disclosure, the electrode active material includes a positive electrode active material or a negative electrode active material. It may be understood that, when the foregoing electrode plate is a positive electrode plate, the electrode active material is a positive electrode active material; and when the foregoing electrode plate is a negative electrode plate, the electrode active material is a negative electrode active material. The positive electrode active material and the negative electrode active material are commonly used materials in the battery field.

The positive electrode active material includes, but is not limited to, at least one of a lithium iron phosphate (LFP), a lithium manganese phosphate, a lithium manganese iron phosphate, a lithium vanadium phosphate, a lithium cobalt phosphate, a lithium cobalt oxide, a lithium manganese oxide, a lithium nickel manganese oxide, a layered lithium nickel cobalt manganese oxide ternary material (NCM), a layered lithium nickel cobalt aluminum oxide ternary material (NCA), and a lithium nickel cobalt manganese aluminum oxide quaternary material (NCMA). The negative electrode active material includes, but is not limited to, at least one of a graphite, a natural graphite, a mesophase carbon microspheres, and a silicon-carbon negative electrode material. NCM represents a layered lithium nickel cobalt manganese oxide ternary material; and in some implementations, has a general structural formula that may be represented by $Li_{1+m}Ni_xCo_yMn_{1-x-y}O_2$ ($x \geq 0.33$, $0 \leq y \leq 0.4$, $0 \leq m \leq 0.1$). NCA represents a layered lithium nickel cobalt aluminum oxide ternary material; and in some implementations, has a general structural formula that may be represented by $Li_{1+m}Ni_xCo_yAl_{1-x-y}O_2$ ($x \geq 0.33$, $0 \leq y \leq 0.4$, $0 \leq m \leq 0.1$). NCMA represents a lithium nickel cobalt manganese aluminum oxide quaternary material; and in some implementations, has a general structural formula that may be represented by $Li_{1+m}Ni_xCo_yMn_zAl_{1-x-y-z}O_2$ ($x \geq 0.33$, $0 \leq y \leq 0.4$, $0 \leq z \leq 0.4$, $0 \leq m \leq 0.1$).

In some specific embodiments of the present disclosure, true density of a lithium cobalt oxide may be 5.1 $g/cm^3$; true density of the foregoing ternary material may be 4.8 $g/cm^3$; true density of a lithium manganese oxide may be 4.2 $g/cm^3$; true density of a lithium iron phosphate may be 3.6 $g/cm^3$; and true density of graphite may be 2.26 $g/cm^3$.

Correspondingly, referring to FIG. 3, an embodiment of the present disclosure further provides a preparation method for an electrode plate. The preparation method includes the following steps:

S301: A three-dimensional conductive network base is constructed.

S302: A mixed material containing an electrode active material and a binder is formed on the three-dimensional conductive network base, to load the electrode active material on the three-dimensional conductive network base, to obtain an electrode plate precursor.

S303: The electrode plate precursor is rolled, to obtain the electrode plate according to the present disclosure.

The preparation method is very controllable, simple to operate, and can be industrialized on a large scale.

In some implementations of the present disclosure, S302 includes: the three-dimensional conductive network base is placed on a current collector, and then the mixed material containing the electrode active material and the binder is coated the three-dimensional conductive network base. In some other implementations, S303 includes: the electrode plate precursor is placed on a current collector, and then the electrode plate precursor is rolled.

In an implementation of the present disclosure, the constructing a three-dimensional conductive network base in S301 includes, but is not limited to: performing three-dimensional printing, performing powder metallurgy, performing electrodeposition, or etching the current collector. A construction method may be adjusted according to a raw material used when the three-dimensional conductive network base is prepared. For example, in some specific embodiments, when the raw material used for the three-dimensional conductive network base is a metal material, the three-dimensional conductive network base may be prepared by using a three-dimensional selective laser sintering method or a powder metallurgy method. In some embodiments, when the three-dimensional conductive network base is a current collector having a three-dimensional network structure, the three-dimensional conductive network base may be prepared by etching part of the current collector. When the raw material used for the three-dimensional conductive network base is a conductive polymer or a conductive inorganic carbon material, the three-dimensional conductive network base may be prepared by using a three-dimensional printing or electrodeposition method.

in some implementations, when the raw material used for preparing the three-dimensional conductive network base is a non-conductive material (for example, a non-conductive ceramic or a non-conductive polymer), the foregoing method further includes conductivity treatment. The conductivity treatment includes, but is not limited to: after the conductive agent is mixed into the raw material, the three-dimensional conductive network base is directly prepared by using a three-dimensional printing or electrodeposition method, before constructing the three-dimensional conductive network base; or after the non-conductive three-dimensional network base is prepared by using the three-dimensional printing or electrodeposition method, then slight carbonization treatment is performed on a surface of the non-conductive three-dimensional network base, or a conductive layer is formed on a surface of the non-conductive three-dimensional network base, to obtain the three-dimensional conductive network base. The conductive layer is suitable for being arranged on any non-conductive three-dimensional network base, and the carbonization treatment is suitable for the non-conductive three-dimensional network base whose raw material is a polymer.

When the raw material used for preparing the three-dimensional conductive network base is a conductive material (for example, a conductive polymer, a conductive inorganic carbon material, or a metal material), the three-dimensional conductive network base can be directly constructed. Certainly, the foregoing conductivity treatment may also be performed on the three-dimensional conductive network base. A specific conductivity treatment manner may be determined according to a form and a preparation method of the material. Details are not described herein again.

In an implementation of the present disclosure, the formation manner in S302 includes coating. The foregoing coating includes drip coating, brush coating, spray coating, dip coating, blade coating, or spin coating. A specific coating manner may be determined based on a mixed material of the electrode active material and the binder. The mixed material may be liquid or solid. In some implementations of the present disclosure, the foregoing mixed material is a liquid mixed material containing a solvent, and the liquid mixed material may be formed on the three-dimensional conductive network base in a manner such as drip coating, brush coating, spray coating, dip coating, blade coating, or spin coating. In some other implementations, the foregoing mixed material is a solid mixed material, and the solid mixed material may be formed on the three-dimensional conductive network base in a manner such as powder spray coating.

An embodiment of the present disclosure further provides a lithium battery. The lithium battery includes the electrode plate according to the present disclosure. In some implementations, in the lithium battery, the positive electrode plate is the electrode plate provided in the present disclosure, and the negative electrode plate is a conventional electrode plate. In some implementations, in the lithium battery, the negative electrode plate is the electrode plate provided in the present disclosure, and the positive electrode plate is a conventional electrode plate. In some implementations, Both the positive electrode plate and the negative electrode plate in the lithium battery are the electrode plates provided in the present disclosure.

The foregoing battery has a high capacity per gram and an excellent battery capacity retention ratio, and the battery has a high energy density.

The following further describes the technical solutions of the present disclosure in detail with reference to specific embodiments.

Embodiment 1

(1) Construction of a three-dimensional conductive network base: A three-dimensional conductive network base made of a carbon fiber composite material was prepared using a three-dimensional printing technology (FIG. 2). Specifically, carbon fiber was passed through a groove filled with polylactic acid (PLA) to obtain carbon fiber whose surface was coated with the PLA, the carbon fiber whose surface was coated with the PLA was passed through a hole with a specific pore size, and excess PLA on the surface of the carbon fiber was scraped off, to obtain a filiform carbon fiber composite material, three-dimensional printing was performed by using the foregoing filiform carbon fiber composite material. After curing, a three-dimensional conductive network base made of the carbon fiber composite material was obtained, and then slight carbonization was performed on a surface thereof to obtain a three-dimensional conductive network base. An actual volume of the three-dimensional conductive network base is $1.13$ cm$^3$.

(2) Preparation of a positive electrode plate: 100 g of LiNi$_{0.8}$Co$_{0.1}$Mn$_{0.1}$ (NCM811) (with D50 of 1 $\mu$m and a true density of 4.8 g/cm$^3$) and 0.5 g of a binder PVDF5130 were dissolved in N-methylpyrrolidone (NMP), and mixed evenly to obtain a positive electrode active slurry. The three-dimensional conductive network base was placed on a positive current collector-aluminum foil, and the three-dimensional conductive network base was coated with the foregoing positive active slurry. After drying, the three-dimensional conductive network base was rolled, to obtain a positive electrode plate.

(3) Preparation of a negative electrode plate: 100 g of a graphite negative electrode active material, 1 g of a thickener, 1 g of an emulsion, and 2 g of conductive carbon black were added to water in a specific order, and mixed evenly to obtain a negative active slurry. A surface of a negative electrode current collector-copper foil is evenly coated with the foregoing negative electrode active material. After drying, a negative electrode plate is obtained after being pressed by a roller mill.

(4) Preparation of a battery

Positive electrode plates obtained in step (2), negative electrode plates obtained in step (3), and separators were alternately stacked, and a battery was prepared in a lamination manner. The positive electrode plates and the negative electrode plates were arranged alternately, and adjacent positive and negative electrode plates were separated by a separator, to obtain a dry cell. The dry cell was placed in an aluminum plastic film package, which an electrolyte was injected into, was then vacuumized and sealed, to hold at 60 °C for 48 h, and was then formed with pressure at 60 °C, secondarily encapsulated, exhausted, and capacity-checked, to obtain a laminated pouch full cell with a capacity of 2.2 Ah. The prepared battery was denoted as S1.

Embodiment 2

The difference between Embodiment 2 and Embodiment 1 is:

(1) Construction of a three-dimensional conductive network base: the positive current collector (aluminum foil) was etched using a laser etching technology to obtain a three-dimensional conductive network, so that an actual volume of a three-dimensional conductive network base in a current collector substrate was 1.13 cm$^3$.

(2) Preparation of a positive electrode plate: 100 g of $LiNi_{0.8}Co_{0.1}Mn_{0.1}$ (NCM811) (with D50 of 1 $\mu$m and a true density of 4.8 g/cm$^3$) and 0.5 g of a binder PVDF5130 were dissolved in NMP, and mixed evenly to obtain a positive electrode active slurry. The three-dimensional conductive network base was evenly coated with the foregoing positive active slurry. After drying, the three-dimensional conductive network base was rolled, to obtain a positive electrode plate.

The prepared battery was denoted as S2.

Embodiment 3

The difference between Embodiment 3 and Embodiment 1 is:

(1) Construction of a three-dimensional conductive network base: by using a three-dimensional printing technology, a poly(3,4-ethylenedioxythiophene)-poly (styrenesulfonic acid) (PEDOT:PSS) conductive polymer was printed into a three-dimensional conductive network base, so that an actual volume of the three-dimensional conductive network base was 1.13 cm$^3$.

(2) Preparation of a positive electrode plate: 100 g of $LiNi_{0.8}Co_{0.1}Mn_{0.1}$ (NCM811) (with D50 of 1 $\mu$m and a true density of 4.8 g/cm$^3$) and 0.5 g of a binder PVDF5130 were dissolved in NMP, and mixed evenly to obtain a positive electrode active slurry. The three-dimensional conductive network base was placed on an aluminum foil, and the three-dimensional conductive network base was coated with the foregoing positive active slurry. After drying, the three-dimensional conductive network base and the aluminum foil were rolled, to obtain a positive electrode plate.

The prepared battery was denoted as S3.

Embodiment 4

The difference between Embodiment 4 and Embodiment 1 is:

(1) Construction of a three-dimensional conductive network base: by using a three-dimensional printing technology, aluminum powder was used as a printing material, and a three-dimensional conductive network base was printed on a positive current collector-aluminum foil through selective laser sintering. A volume of the three-dimensional conductive network was 1.13 cm$^3$.

(2) Preparation of a positive electrode plate: 100 g of $LiNi_{0.8}Co_{0.1}Mn_{0.1}$ (NCM811) (with D50 of 1 $\mu$m and a true density of 4.8 g/cm$^3$) and 0.5 g of a binder PVDF5130 were dissolved in NMP, and mixed evenly to obtain a positive electrode active slurry, and the three-dimensional conductive network base was coated with the foregoing positive active slurry. After drying, the three-dimensional conductive network base and the aluminum foil were rolled, to obtain a positive electrode plate.

The prepared battery was denoted as S4.

Embodiment 5

A preparation process is similar to that in Embodiment 3, and a difference is: after the three-dimensional conductive network base was printed, the three-dimensional conductive network base was placed in a high-temperature oven, and slight carbonization was performed on a surface of the three-dimensional conductive network base at 200 °C. The prepared battery was denoted as S5.

Embodiment 6

A preparation process is similar to that in Embodiment 3, and a difference is: a carbon nanotube was added to a raw material for three-dimensional printing, namely, a PEDOT:PSS conductive polymer, and a mass percentage of the carbon nanotube in an obtained mixture was 20%. The prepared battery was denoted as S6.

Embodiment 7

A preparation process is similar to that in Embodiment 3, and a difference is: graphene was added to a raw material for three-dimensional printing, namely, a PEDOT:PSS conductive polymer, and a mass percentage of the graphene in an obtained mixture was 20%. The prepared battery was denoted as S7.

Embodiment 8 to Embodiment 19

According to the preparation method of Embodiment 7, positive electrode plates of Embodiment 8 to Embodiment 19 were prepared. Changes in parameters of the positive electrode plates in Embodiments 8 to 19 are summarized in Table 1. Refer to Table 1. The LFP has D50 of 0.5 $\mu$m and a true density of 3.6 g/cm$^3$. The prepared batteries are denoted as S8 to S19 respectively.

Embodiment 20

The negative electrode plate of Embodiment 20 also meets the limitations of the present disclosure. Specifically, by using a three-dimensional printing technology, a mixture of poly(3,4-ethylenedioxythiophene)-poly (styrenesulfonic acid) (PEDOT:PSS) conductive polymer and graphene (a mass percentage of the graphene in the mixture is 20%) was printed into a three-dimensional conductive network base, and 100 g of a graphite negative electrode active material (with D50 of 15 $\mu$m and a true density of 2.26 g/cm$^3$), 1 g of a thickener, and 1 g of an emulsion were added to water in a specific order, and mixed evenly to obtain a negative active slurry. The three-dimensional conductive network base was placed on a negative current collector copper foil, and the foregoing three-dimensional conductive network base was coated with the foregoing negative active slurry. After drying, the three-dimensional conductive network base was rolled, to obtain a negative electrode plate. The negative electrode plate and the positive electrode plate were assembled into a battery S20. It should be noted that the positive electrode plate of the battery S20 is the positive electrode plate prepared in Embodiment 7.

To highlight the beneficial effects of the embodiments of the present disclosure, the following comparative examples are set.

Comparative Example 1

The difference from Embodiment 7 is: an actual volume of the prepared three-dimensional conductive network base was 0.06 cm$^3$. The prepared battery was denoted as DS1.

Comparative Example 2

The difference from Embodiment 7 is: an actual volume of the prepared three-dimensional conductive network base was 20 cm$^3$. The prepared battery was denoted as DS2.

Comparative Example 3

The difference from Embodiment 1 is: 100 g of LiNi$_{0.8}$Co$_{0.1}$Mn$_{0.1}$ (NCM811) (with D50 of 1 $\mu$m and a true density of 4.8 g/cm$^3$) and 0.5 g of a binder PVDF5130 were dissolved in NMP, and mixed evenly to obtain a positive electrode active slurry. A carbon fiber composite board with a volume of 1.13 cm$^3$ and with a surface being carbonized was coated with the foregoing positive active slurry, and was placed on an aluminum foil. After drying, the carbon fiber composite board was rolled, to obtain a positive electrode plate without a three-dimensional conductive network base. The prepared battery was denoted as DS3.

Comparative Example 4

The difference from Embodiment 1 is: 100 g of LiNi$_{0.8}$Co$_{0.1}$Mn$_{0.1}$ (NCM811) (with D50 of 1 $\mu$m and a true density of 4.8 g/cm$^3$), 0.5 g of a binder PVDF5130, and 2.486 g of a carbon fiber conductive agent (HV) were dissolved together in NMP, and mixed evenly to obtain a positive electrode active slurry. An aluminum foil was evenly coated with the foregoing positive active slurry. After drying, the aluminum foil was rolled, to obtain a positive electrode plate without a three-dimensional conductive network base. The prepared battery was denoted as DS4.

Table 1: Summary table of parameters of the electrode plates prepared in the embodiments and the comparative examples

| Experiment number | Three-dimensional conductive network | | | | |
|---|---|---|---|---|---|
| | Electrode active material | D50 ($\mu$m) | Mass of an electrode active material m (g) | True density of an electrode active material $\rho$ (g/cm$^3$) | Actual volume of a three-dimensional conductive network base V (cm$^3$) |
| Embodiment 1 | NCM811 | 1 | 100 | 4.8 | 1.13 |
| Embodiment 2 | NCM811 | 1 | 100 | 4.8 | 1.13 |
| Embodiment 3 | NCM811 | 1 | 100 | 4.8 | 1.13 |
| Embodiment 4 | NCM811 | 1 | 100 | 4.8 | 1.13 |
| Embodiment 5 | NCM811 | 1 | 100 | 4.8 | 1.13 |
| Embodiment 6 | NCM811 | 1 | 100 | 4.8 | 1.13 |
| Embodiment 7 | NCM811 | 1 | 100 | 4.8 | 1.13 |
| Embodiment 8 | LFP | 0.5 | 100 | 3.6 | 1.13 |
| Embodiment 9 | NCM811 | 1 | 100 | 4.8 | 0.4 |
| Embodiment 10 | NCM811 | 1 | 100 | 4.8 | 18.98 |
| Embodiment 11 | NCM811 | 1 | 100 | 4.8 | 3.8 |
| Embodiment 12 | NCM811 | 1 | 100 | 4.8 | 9.52 |
| Embodiment 13 | NCM811 | 1 | 100 | 4.8 | 15.7 |
| Embodiment 14 | NCM523 | 1 | 100 | 4.8 | 1.13 |
| Embodiment 15 | NCM622 | 1 | 100 | 4.8 | 1.13 |
| Embodiment 16 | NCM712 | 1 | 100 | 4.8 | 1.13 |
| Embodiment 17 | NCM811 | 5 | 100 | 4.8 | 1.13 |
| Embodiment 18 | NCM811 | 15 | 100 | 4.8 | 1.13 |
| Embodiment 19 | NCM811 | 20 | 100 | 4.8 | 1.13 |
| Embodiment 20 | Graphite (negative electrode) | 15 (negative electrode) | 100 (negative electrode) | 2.26 (negative electrode) | 0.56 (negative electrode) |

(continued)

| Experiment number | Three-dimensional conductive network | | | | |
|---|---|---|---|---|---|
| | Electrode active material | D50 ($\mu$m) | Mass of an electrode active material m (g) | True density of an electrode active material $\rho$ (g/cm$^3$) | Actual volume of a three-dimensional conductive network base V (cm$^3$) |
| Comparative Example 1 | NCM811 | 1 | 100 | 4.8 | 0.06 |
| Comparative Example 2 | NCM811 | 1 | 100 | 4.8 | 20 |
| Comparative Example 3 | NCM811 | 1 | 100 | 4.8 | 0 |
| Comparative Example 4 | NCM811 | 1 | 100 | 4.8 | 0 |

Electrochemical performance tests of the electrode plates and the batteries prepared in the foregoing embodiments and comparative examples include the following steps:

(1) Longitudinal resistivity test of the electrode plate: the obtained positive electrode plates were tested for longitudinal resistivity by using a longitudinal resistivity meter. A test pressure was set to 25 Mpa, a pressurization time was 30s, and an average value was taken after 10 points of each group of electrode plates were tested. The obtained data is summarized in Table 2.

(2) Ultimate compaction density test of the electrode plate: the pressure of the roller mill was continuously increased, and the thickness of the electrode plate was tested by using a micrometer until the thickness of the electrode plate did not decrease any more, to obtain the ultimate compaction density of the electrode plate. The obtained data is summarized in Table 3.

(3) Battery capacity test: The capacity testing steps are as follows: environment temperature 25 °C, 1 C at 2.2 Ah. 1) Charging: Charge to 4.25 V/Cell at 1/3 C, a constant current, and a constant voltage with a cutoff current at 0.05 C, and hold for 30 min. (2) Discharge: Discharge to 2.5 V/Cell at 1/3 C and a constant current, and hold for 30 min. 3) Cycle 3 times, and record a third time of discharge capacity as the real capacity of the battery. (Because the positive electrode active material used in Embodiment 8 is LFP, an upper limit voltage is set to be 3.8 V and a lower limit voltage is set to be 2.0 V during testing). The results of the measurements are summarized in Table 3.

(4) Battery cycle performance test: 1 C at 2.2 Ah, 1) Charging: Charge to 4.25 V/Cell at 1/3 C, a constant current, and a constant voltage with a cutoff current at 0.05 C, and hold for 30 min. (2) Discharge: Discharge to 2.5 V/Cell at 1/3 C and a constant current, and hold for 30 min. 3) Cycle 3 times, and record a third time of discharge capacity as the real capacity C0 of the battery. 4) Charge: Take the real capacity C0 of the battery as 1 C, and charge to 4.25 V at 1 C, a constant current, and a constant voltage with a cutoff current at 0.05 C. 5) Hold for 30 min. (6) Discharge: Take the real capacity C0 of the battery as 1 C, and discharge to 2.5 V at 1 C and a constant current. 7) Hold for 30 min. 8) A total of 500 cycles from 4) to 7). (Because the positive electrode active material used in Embodiment 8 is LFP, an upper limit voltage is set to be 3.8 V and a lower limit voltage is set to be 2.0 V during testing). The results of the measurements are summarized in Table 3.

Table 2: Longitudinal resistivity and ultimate compaction density of the electrode plates obtained in the embodiments and the comparative examples

| Experiment number | Resistivity of the electrode plate ($\Omega \cdot$ cm) | Ultimate compaction density of the electrode plate (g/cm$^3$) |
|---|---|---|
| Embodiment 1 | 24.5 | 3.71 |
| Embodiment 2 | 24.8 | 3.68 |
| Embodiment 3 | 26.1 | 3.73 |
| Embodiment 4 | 24.7 | 3.69 |
| Embodiment 5 | 25.6 | 3.70 |
| Embodiment 6 | 23.7 | 3.73 |
| Embodiment 7 | 24.9 | 3.72 |

(continued)

| Experiment number | Resistivity of the electrode plate (Ω · cm) | Ultimate compaction density of the electrode plate (g/cm$^3$) |
|---|---|---|
| Embodiment 8 | 43.6 | 2.68 |
| Embodiment 9 | 26.4 | 3.73 |
| Embodiment 10 | 24.3 | 3.67 |
| Embodiment 11 | 24.9 | 3.70 |
| Embodiment 12 | 24.7 | 3.69 |
| Embodiment 13 | 25.1 | 3.68 |
| Embodiment 14 | 25.4 | 3.71 |
| Embodiment 15 | 25.1 | 3.72 |
| Embodiment 16 | 24.8 | 3.71 |
| Embodiment 17 | 25.7 | 3.68 |
| Embodiment 18 | 25.3 | 3.65 |
| Embodiment 19 | 25.0 | 3.63 |
| Embodiment 20 | 18.3 (negative electrode) | 1.65 (negative electrode) |
| Comparative Example 1 | 96.5 | 3.73 |
| Comparative Example 2 | 23.9 | 3.65 |
| Comparative Example 3 | 346.2 | 3.62 |
| Comparative Example 4 | 35.7 | 3.68 |

Table 3: Capacities per gram and capacity retention ratios of batteries prepared in the embodiments and the comparative examples

| Battery number | Capacity per gram (mAh/g) | Capacity retention ratio (%) after 500 cycles |
|---|---|---|
| S1 | 195.4 | 93.9 |
| S2 | 195.0 | 93.7 |
| S3 | 195.1 | 94.1 |
| S4 | 195.5 | 93.2 |
| S5 | 194.7 | 94.9 |
| S6 | 195.4 | 94.3 |
| S7 | 195.3 | 95.0 |
| S8 | 142.3 | 98.4 |
| S9 | 195.8 | 94.8 |
| S10 | 193.5 | 95.1 |
| S11 | 194.9 | 94.8 |
| S12 | 195.3 | 95.7 |
| S13 | 195.0 | 96.0 |
| S14 | 173.1 | 98.7 |
| S15 | 178.8 | 97.4 |
| S16 | 185.3 | 96.9 |
| S17 | 196.4 | 93.1 |
| S18 | 199.7 | 91.4 |

(continued)

| Battery number | Capacity per gram (mAh/g) | Capacity retention ratio (%) after 500 cycles |
|---|---|---|
| S19 | 201.3 | 89.6 |
| S20 | 354.6 (negative electrode) | 96.8 |
| DS1 | 195.9 | 89.3 |
| DS2 | 190.5 | 94.6 |
| DS3 | 194.3 | 88.2 |
| DS4 | 195.0 | 87.4 |

It can be learned from the data in Table 2 that, the positive electrode plates having the three-dimensional conductive network base (Embodiments 1 to 19) have a longitudinal resistivity much less than that of the positive electrode plate without the three-dimensional conductive network base (Comparative Example 3). In addition, when the actual volume of the three-dimensional conductive network base is within the limit value of the design rule, the longitudinal resistivity of the corresponding positive electrode plates (Embodiments 1 to 19) is much less than that of the positive electrode plate whose actual volume is less than the usage amount of the design rule (Comparative Example 1), while the positive electrode plate whose actual volume of the three-dimensional conductive network base exceeds the usage amount of the design rule (Comparative Example 2) is not significantly improved in resistivity, and the mass proportion of the positive electrode active material in the electrode plate is inevitably reduced, affecting battery performance. However, it can be seen from the data of the ultimate compaction density of the positive electrode plate that the ultimate compaction density of the positive electrode plate having the three-dimensional conductive network base (Embodiments 1 to 19 and Comparative Examples 1 and 2) is greater than that of the positive electrode plate without the three-dimensional conductive network base (Comparative Example 3), but when the actual volume of the three-dimensional conductive network base exceeds the usage amount of the three-dimensional network design rule, the electrode plate compaction density of the corresponding positive electrode plate decreases (Comparative Example 2).

It can be learned from the data in Table 3 that the battery having the electrode plate with the three-dimensional conductive network structure provided in the present disclosure has a relatively balanced performance in terms of the function of capacity of gram and the capacity retention ratio after cycling. When the actual volume of the three-dimensional conductive network structure exceeds the limit in the present disclosure, the capacity of gram is low (battery DS2). When the actual volume of the three-dimensional conductive network structure is less than the limit in the present disclosure, a poor capacity retention ratio (battery DS1) is caused. When the positive and negative electrode plates of the battery are both the electrode plates defined in the present disclosure (the battery S20), compared with the battery S7 in which the same positive electrode plate is used, the capacity retention ration of the battery S20 after 500 cycles is higher, indicating that when the positive and negative electrode plates of the battery are both the electrode plates defined in the present disclosure, the capacity retention ratio of the battery after cycling is better. In addition, it can be seen from the data of the batteries S1 to S20 in the embodiments and the batteries DS1 to DS4 in the comparative examples that the electrode plate without the three-dimensional conductive network base does not have any advantage in terms of the capacity per gram, and the capacity retention ratio of the battery decreases extremely quickly.

The foregoing descriptions are exemplary implementations of the present disclosure. It should be noted that a person of ordinary skill in the art may further make several improvements and refinements to the present disclosure without departing from the principle of the present disclosure. These improvements and refinements are also considered as the protection scope of the present disclosure.

**Claims**

1. An electrode plate (100), the electrode plate (100) comprising an electrode active material layer, the electrode active material layer comprising a three-dimensional conductive network base (11), and an electrode active material and a binder that are loaded on the three-dimensional conductive network base (11), and the three-dimensional conductive network base (11) and the electrode active material satisfying a relational expression below:

$$d \times 6D^2 \times (\frac{m}{\rho} / \frac{\pi D^3}{6}) \leq V \leq (D^3 - \frac{\pi D^3}{6}) \times (\frac{m}{\rho} / \frac{\pi D^3}{6})$$

wherein V is an actual volume of the three-dimensional conductive network base (11), whose unit is $cm^3$; m is a mass of the electrode active material, whose unit is g; D is a D50 particle size of the electrode active material, whose unit is $\mu$m; $\rho$ is a true density of the electrode active material, whose unit is $g/cm^3$; and d is a thickness of a single layer of carbon atom layers with a value of d is 0.334 nm.

2. The electrode plate (100) according to claim 1, wherein D is in a range from 0.1 $\mu$m to 20 $\mu$m.

3. The electrode plate (100) according to claim 1 or 2, wherein in the electrode plate (100), V corresponding to each 100 g of the electrode active material is in a range from 0.01 $cm^3$ to 20 $cm^3$.

4. The electrode plate (100) according to any one of claims 1 to 3, wherein the three-dimensional conductive network base (11) is a current collector with a three-dimensional network structure.

5. The electrode plate (100) according to any one of claims 1 to 3, wherein the electrode plate (100) further comprises a current collector (10), and the three-dimensional conductive network base (11) is located on at least one side surface of the current collector (10).

6. The electrode plate (100) according to any one of claims 1 to 5, wherein a shape of the three-dimensional conductive network base (11) comprises a cage shape.

7. The electrode plate (100) according to any one of claims 1 to 6, wherein at least part of a material of the three-dimensional conductive network base (11) comprises at least one of a conductive polymer, a metal material, and a conductive carbon material.

8. The electrode plate (100) according to any one of claims 1 to 7, wherein the electrode plate (100) is a positive electrode plate, the electrode active material comprises a positive electrode active material, and the positive electrode active material comprises at least one of a lithium iron phosphate, a lithium manganese phosphate, a lithium manganese iron phosphate, a lithium vanadium phosphate, lithium cobalt phosphate, a lithium cobalt oxide, a lithium manganese oxide, a lithium nickel manganese oxide, a layered lithium nickel cobalt manganese oxide ternary material, a layered lithium nickel cobalt aluminum oxide ternary material, and a lithium nickel cobalt manganese aluminum oxide quaternary material.

9. The electrode plate (100) according to claim 8, wherein a general structural formula of the layered lithium nickel cobalt manganese oxide ternary material is $Li_{1+m}Ni_xCo_yMn_{1-x-y}O_2$, wherein $x \geq 0.33$, $0 \leq y \leq 0.4$, and $0 \leq m \leq 0.1$.

10. The electrode plate (100) according to claim 8 or 9, wherein a general structural formula of the layered lithium nickel cobalt aluminum oxide ternary material is $Li_{1+m}Ni_xCo_yAl_{1-x-y}O_2$, wherein $x \geq 0.33$, $0 \leq y \leq 0.4$, and $0 \leq m \leq 0.1$.

11. The electrode plate (100) according to any one of claims 9 to 10, wherein a general structural formula of the lithium nickel cobalt manganese aluminum oxide quaternary material is $Li_{1+m}Ni_xCo_yMn_zAl_{1-x-y-z}O_2$, wherein $x \geq 0.33$, $0 \leq y \leq 0.4$, $0 \leq z \leq 0.4$, and $0 \leq m \leq 0.1$.

12. The electrode plate (100) according to any one of claims 1 to 7, wherein the electrode plate (100) is a negative electrode plate, the electrode active material comprises a negative electrode active material, and the negative electrode active material comprises at least one of a graphite, a natural graphite, a mesophase carbon microspheres, and a silicon-carbon negative electrode material.

13. A preparation method for an electrode plate, comprising:

   constructing a three-dimensional conductive network base (S301);
   forming a mixed material containing an electrode active material and a binder on the three-dimensional conductive network base, to load the electrode active material and the binder on the three-dimensional conductive network base, to obtain an electrode plate precursor (S302); and
   rolling the electrode plate precursor, to obtain the electrode plate according to any one of claims 1 to 12 (S303).

14. The preparation method according to claim 13, wherein the forming the mixed material containing the electrode active material and the binder on the three-dimensional conductive network base comprises:
   placing the three-dimensional conductive network base on a current collector, and then coating the three-dimensional conductive network base with the mixed material containing the electrode active material and the binder.

15. The preparation method according to claim 13, wherein the rolling the electrode plate precursor comprises: placing the electrode plate precursor on a current collector, and then rolling the electrode plate precursor.

16. The preparation method according to any one of claims 13 to 15, wherein the constructing a three-dimensional conductive network base comprises:
performing three-dimensional printing, performing powder metallurgy, performing electrodeposition, or etching the current collector.

17. The preparation method according to claim 16, wherein when a raw material used for preparing the three-dimensional conductive network base is a non-conductive material, the constructing a three-dimensional conductive network base further comprises: performing conductivity treatment.

18. The preparation method according to claim 17, wherein the performing conductivity treatment comprises:

after a conductive agent is mixed into the raw material, by the three-dimensional printing or the electrodeposition, preparing the three-dimensional conductive network base; or
after a non-conductive three-dimensional network base is prepared through the three-dimensional printing or the electrodeposition, performing carbonization treatment on a surface of the non-conductive three-dimensional network base or forming a conductive layer on the non-conductive three-dimensional network base, to obtain the three-dimensional conductive base.

19. The preparation method according to any one of claims 13 to 18, wherein a formation manner of forming the mixed material containing the electrode active material and the binder on the three-dimensional conductive network base comprises coating, and the coating comprises drip coating, brush coating, spray coating, dip coating, blade coating, or spin coating.

20. A lithium battery, comprising the electrode plate (100) according to any one of claims 1 to 12.

FIG. 1A

FIG. 1B

FIG. 2

| Construct a three-dimensional conductive network matrix | S301 |

| Form a mixed material containing an electrode active material and a binder on the three-dimensional conductive network matrix, to load the electrode active material on the three-dimensional conductive network matrix, to obtain an electrode plate precursor | S302 |

| Roll the electrode plate precursor, to obtain the electrode plate according to the present disclosure | S303 |

FIG. 3

## INTERNATIONAL SEARCH REPORT

| International application No. |
|---|
| **PCT/CN2023/079503** |

| A. | CLASSIFICATION OF SUBJECT MATTER |
|---|---|

H01M4/13(2010.01)i; H01M4/139(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 三维, 多孔, 网络, 基材, 基体, 集流体, 集电体, 活性材料, 活性物质, 粒径, D50, 体积, 质量, 密度, battery, cell, three, dimensional, 3D, porous, network, matrix, current, collector, active, material, particle, size, volume, mass, density

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 105552302 A (SUN YAT-SEN UNIVERSITY) 04 May 2016 (2016-05-04) description, paragraphs 0009-0024, and figure 1 | 1-20 |
| A | CN 113161510 A (SUNWODA ELECTRIC VEHICLE BATTERY CO., LTD.) 23 July 2021 (2021-07-23) entire document | 1-20 |
| A | CN 113921753 A (BYD CO., LTD.) 11 January 2022 (2022-01-11) entire document | 1-20 |
| A | CN 102439771 A (HONG KONG APPLIED SCIENCE AND TECHNOLOGY RESEARCH INSTITUTE CO., LTD.) 02 May 2012 (2012-05-02) entire document | 1-20 |
| A | CN 104852013 A (GUANGZHOU INSTITUTE OF ENERGY CONVERSION, CHINESE ACADEMY OF SCIENCES) 19 August 2015 (2015-08-19) entire document | 1-20 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 May 2023** | **24 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/079503** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP H07296809 A (SHIN KOBE ELECTRIC MACHINERY CO., LTD.) 10 November 1995 (1995-11-10)<br>        entire document | 1-20 |

Form PCT/ISA/210 (second sheet) (July 2022)

| International application No. |
| --- |
| **PCT/CN2023/079503** |

| Patent document cited in search report | | | Publication date (day/month/year) | Patent family member(s) | | | Publication date (day/month/year) |
| --- | --- | --- | --- | --- | --- | --- | --- |
| CN | 105552302 | A | 04 May 2016 | None | | | |
| CN | 113161510 | A | 23 July 2021 | None | | | |
| CN | 113921753 | A | 11 January 2022 | None | | | |
| CN | 102439771 | A | 02 May 2012 | WO | 2013026190 | A1 | 28 February 2013 |
| CN | 104852013 | A | 19 August 2015 | None | | | |
| JP | H07296809 | A | 10 November 1995 | None | | | |

Form PCT/ISA/210 (patent family annex) (July 2022)

**REFERENCES CITED IN THE DESCRIPTION**

**Patent documents cited in the description**

- CN 202210209397X